# EUROPÄISCHE PATENTSCHRIFT

(11) **EP 0 590 393 B1**
(45) Veröffentlichungstag und Bekanntmachung des Hinweises auf die Patenterteilung: **15.07.1998**
(21) Anmeldenummer: 93114627.8
(22) Anmeldetag: 11.09.1993
(51) Int. Cl.: G02B 6/42

(54) **Halbleiter-Lasermodul**
Semiconductor laser module
Module à laser semiconducteur

(30) Priorität: 26.09.1992 DE 4232327
(43) Veröffentlichungstag der Anmeldung: 06.04.1994
(73) Patentinhaber: ALCATEL ALSTHOM COMPAGNIE GENERALE D'ELECTRICITE, 75008 Paris (FR)
(72) Erfinder: Luz, Gerhard, D-74321 Bietigheim-Bissingen (DE); Ulmer, Michael, D-70469 Stuttgart (DE); Deppisch, Bernhard, D-70825 Korntal (DE)
(74) Vertreter: Schätzle, Albin, Dipl.-Phys.

(56) Entgegenhaltungen:
- EP-A- 0 181 532
- EP-A- 0 259 888
- WO-A-89/08277
- US-A- 4 953 171
- RESEARCH DISCLOSURE Bd. 74, Nr. 315, Juli 1990, HAVANT GB Seite 584 ANONYMOUS : 'Laser Lens Light Pencil'

## Beschreibung

Die vorliegende Erfindung bezieht sich auf einen Halbleiter-Lasermodul nach dem Oberbegriff des Anspruchs 1.

Ein derartiges Halbleiter-Lasermodul ist aus der Internationalen Patentanmeldung WO 89/08277 bekannt. Bei diesem Aufbau kollimiert eine Kugellinse das von einem Halbleiter-Laser emittierte Licht. Der kollimierte Strahl gelangt durch einen optischen Isolator auf eine zweigeteilte GRIN-Linse, die den Strahl auf eine schräg angeschliffene Endfläche einer optische Faser fokussiert. Die die Kugellinse hat dort einen relativ geringen Abstand zum Halbleiter-Laser, so daß die Rückwirkungen dieser Kugellinse auf den Halbleiter-Laser relativ groß sind.

Aus der EP 0259 888 A3 ist außerdem bekannt, einen Halbleiter-Laser mit einer davor positionierten Kugellinse in einem Dual-in-line-Gehäuse anzuordnen. Das vom Halbleiter-Laser emittierte Licht verläßt das hermetisch dicht verschlossenen Gehäuse durch ein schräg gestelltes Fenster und trifft auf eine zweite Linse, die den Strahl auf das Ende einer optischen Faser fokussiert. Auch dort hat die Kugellinse einen relativ geringen Abstand zum Halbleiter-Laser mit der Folge, daß hier ebenfalls die Rückwirkungen dieser Kugellinse auf den Halbleiter-Laser relativ groß sind.

Bekannt sind ferner die Verwendung einer asphärischen Linse bei einem Halbleiter-Lasermodul Proceedings OFC 1990, San Francisco, Paper FD4) und eine plankonvexe Linse als zweite Linse bei einem Halbleiter-Lasermodul (JOURNAL OF LIGHTWAVE TECHNOLOGY, VOL. 7, NO. 2, FEBRUARY 1989), Seiten 340 - 346), wobei bei beiden bekannten Halbleiter-Lasermodulen der konstruktive Aufbau aus den schematischen Darstellungen dieser Veröffentlichungen nicht ersichtlich ist.

Aufgabe der vorliegenden Erfindung ist es, einen Halbleiter-Lasermodul der eingangs genannten Art zu schaffen, der sich bei der standardmäßigen Verwendung eines Butterfly-Gehäuses und deren Anschlußbelegung durch extrem geringe Rückwirkung auf den Halbleiter-Laser bei bestmöglichem Koppelwirkungsgrad auszeichnet.

Zur Lösung dieser Aufgabe sind bei einem Halbleiter-Lasermodul der genannten Art die im Anspruch 1 angegebenen Merkmale vorgesehen.

Durch die als erste Linse verwendete asphärische Linse kann ein größtmöglicher Abstand zwischen der Linsenoberfläche und dem Halbleiter-Laser erreicht werden, was zu einer kleinstmöglichen Rückwirkung von der asphärischen Linse auf den Halbleiter-Laser führt. Die Anordnung des Fensters ermöglicht eine optimale Ankopplung der optischen Faser, da die beiden Prozesse der Faserankopplung und der hermetischen Trennung zwischen Innen- und Außenraum des Halbleiter-Lasermoduls getrennt vorgenommen werden können. Dadurch können beide Schritte für sich optimiert werden, ohne daß sie, was insbesondere für die Faserankopplung gelten würde, einander nachteilig beeinflußen. Auch die Schrägstellung des Fensters führt zu einer Verringerung von Reflexen und damit von möglichen Rückwirkungen auf den Halbleiter-Laser. Die Möglichkeit der Justierung beider Linsen führt ebenfalls zu einer optimalen Kopplung, so daß sich durch die verwendete Linsenanordnung ein Koppelwirkungsgrad von etwa 70% erreichen läßt. Die Faserankopplung über die Justierhülse und das stumpfe Ansetzen an den zweiten Linsenträger ergibt in vorteilhafter Weise eine vermeidbare Verschiebung der beiden Planflächen. Dieser konstruktive Aufbau des Halbleiter-Lasermoduls ermöglicht einen Aufbau in drei Schritten, nämlich zunächst die Justage der ersten Linse gegenüber dem Halbleiter-Laser, der Justage der zweiten Linse an der Gehäuseendwand und drittens die In-Line-Anpassung der optischen Faser gegenüber der zweiten Linse. Dies erlaubt eine optimale Kontrolle beim Aufbau eines derartigen Halbleiter-Lasermoduls.

Eine vorteilhafte konstruktive Ausgestaltung der Justage der ersten Linse in den drei Raumkoordinaten gegenüber dem Halbleiter-Laser ergibt sich mit den Merkmalen gemäß Anspruch 2.

Eine vorteilhafte hermetische Gehäusedurchführung auch hinsichtlich ihres konstruktiven Aufbaues ergibt sich mit den Merkmalen gemäß Anspruch 3.

Bei Verwendung der Merkmale gemäß Anspruch 4 werden auch mögliche Rückwirkungen durch Reflexe des Isolators auf den Halbleiter-Laser vermieden.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.
Es zeigen:
- Figur 1: einen Längsschnitt durch einen Halbleiter-Lasermodul bei abgenommenem Gehäusedeckel gemäß einem bevorzugten Ausführungsbeispiel vorliegender Erfindung und
- Figur 2: eine teilweise geschnittene Draufsicht auf den Halbleiter-Lasermodul gemäß Pfeil II der Fig. 1.

Das in der Zeichnung gemäß einem bevorzugten Ausführungsbeispiel vorliegender Erfindung dargestellte Halbleiter-Lasermodul 10 besitzt ein Gehäuse 11 in sog. "Butterfly"-Ausführung. Das Gehäuse 11 besitzt einen rechteckförmigen Boden 12, auf dem eine ebenfalls rechteckförmige Seitenwandanordnung 13 steht, aus deren Längsseitenwände eine identische Anzahl von in gleichmäßigem Abstand zueinander angeordneten Anschlußstiften 14, 15 ragt. Die Rückwand 18 am hinteren Bereich des Gehäuses 11 ist blockartig und mit einer Durchgangsbohrung 19 und einer planen äußeren Justierfläche 21 versehen. Das Gehäuse 11 kann, soweit es bisher in seinen Einzelteilen beschrieben worden ist, auch einstückig ausgebildet sein. Nicht dargestellt ist ein zum Boden 12 parallel verlaufender separater Deckel des Gehäuses 11.

Im Innern des Gehäuses 11 ist auf einem am Boden 12 gehaltenen Peltierkühler 22 ein Submountträger 23 befestigt, der eine Leiterplatte 24, eine Monitordiode 27, einen Submount 26 mit Leiterbahnen 29, einen Thermistor 30 und einen Halbleiter-Laser 28 trägt.

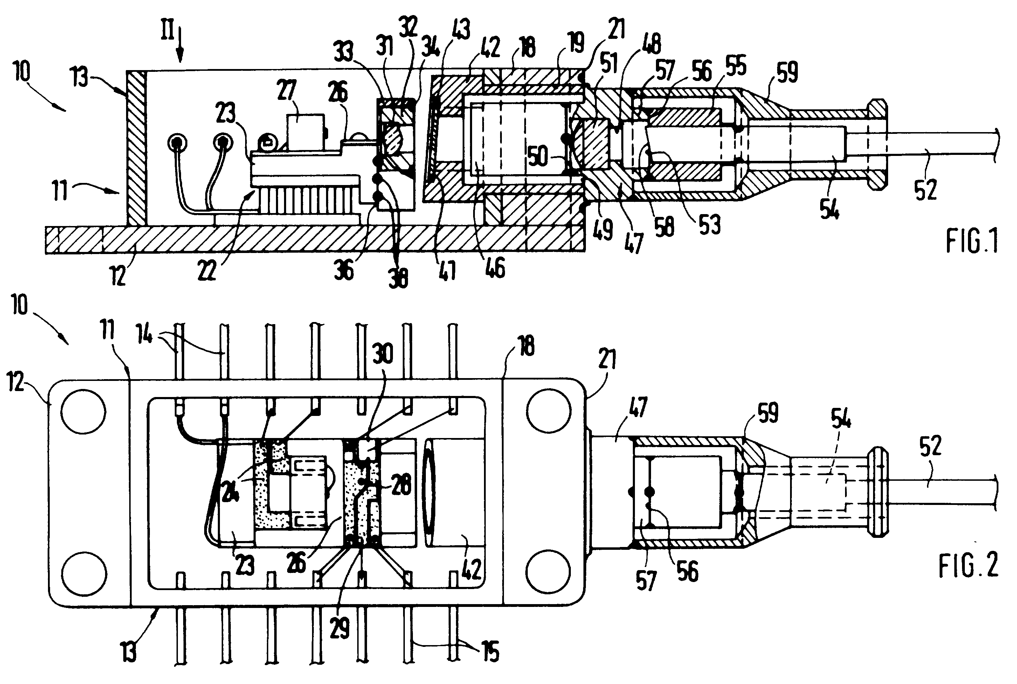

Der den Halbleiter-Laser 28 tragende Bereich des Submountträgers 23 liegt einer ersten Linse 31 gegenüber, die als asphärische Linse ausgebildet ist, die das Licht des Halbleiter-Lasers 28 zu einem parallelen (kollimierten) Strahl formt. Die asphärische Linse 31 ist in einer zylindrischen Fassung 32 fest aufgenommen, welche in einem hohlzylindrischen Träger 33 in axialer Richtung justierbar angeordnet ist. Die asphärische Linse 31 ist in der metallischen als Ring ausgebildeten Fassung 32 mittels Glaslot befestigt. Die Fassung 32 wird, nachdem sie in axialer Richtung gegenüber dem Träger 33 justiert worden ist, an ihrer Rückstirnfläche mit der Rückstirnfläche des hohlzylindrischen Trägers 33 mittels Laserschweißpunkten 34 verbunden. Der hohlzylindrische Träger 33 ist gegenüber dem Submountträger 23 in den beiden zueinander senkrecht stehenden Koordinatenachsen in der zur Strahlrichtung senkrechten Ebene 36 justierbar. Hierzu wird der Träger 33 mit seiner nach unten verbreiterten in der senkrechten Ebene 36 liegenden Anlagefläche längs der anliegenden senkrechten Justierfläche des Submountträgers 23 verschoben. Mittels Laserschweißen wird, wie anhand der Schweißpunkte 38 dargestellt, die justierte Lage in der optimalen Position fixiert. Diese Art der Justierung und Befestigung erlaubt die Einstellung des parallelen Strahles hinter der asphärischen Linse 31 und gleichzeitig die Vermeidung von Komafehlern, was Voraussetzung für einen guten Koppelwirkungsgrad ist. Die asphärische Linse 31 ist dabei so gewählt, daß ein größtmöglicher Abstand zwischen Halbleiter-Laser 28 und ihrer Oberfläche erreicht wird, was eine kleinstmögliche Rückwirkung von der ersten Linse 31 auf den Halbleiter-Laser 28 ergibt. Wie aus Fig. 2 ersichtlich ist, sind die Leiterbahnen 24, 29, der Thermistor 30 u. dgl. mit den betreffenden Anschlußstiften 14, 15 elektrisch verbunden.

In dem parallelen Strahlengang befindet sich ein schräggestelltes entspiegeltes Glasfenster 41. Für das Glasfenster 41 ist ein als Gehäusedurchführung dienender hohlzylindrischer Halter 42 vorgesehen, dessen einer Teil in der blockartigen Rückwand 18 aufgenommen ist und in dessen der ersten Linse 31 zugewandtem verdicktem Teil das Glasfenster 41 in einer kreisförmigen Nut 43 in der Stirnwand aufgenommen ist. Das Glasfenster 41 ist unter einem spitzen Winkel zur zum Strahlengang senkrechten Ebene geneigt und ist in der Nut 43 des Halters 42 hermetisch dicht aufgenommen. Dadurch ergibt sich eine hermetische Trennung zwischen dem im Inneren des Gehäuses 11 befindlichen Bereich des Halbleiter-Lasermoduls 10 und den außerhalb des Gehäuses 11 befindlichen Teilen. Durch den schrägen Einbau des Glasfensters 41 sind Reflexe zurück auf den Halbleiter-Laser 28 vermieden. Der Halter 42 kann in bevorzugter Weise mit dem Gehäuse 11 auch einstückig sein.

Innerhalb des Halters 42 befindet sich im parallelen Strahlengang ein Isolator 46, dessen Komponenten in nicht dargestellter Weise schräg eingebaut sind, so daß ebenfalls keine Reflexe auf den Halbleiter-Laser 28 zurückfallen können. Der Isolator 46 ist in bekannter Weise aufgebaut. Der Isolator 46, das Glasfenster 41, die erste Linse 31 und der Halbleiter-Laser 28 sind, wie sich aus der Zeichnung ergibt, in-line angeordnet, d.h., sie befinden sich optisch genau in der Achse des parallelen Strahlenganges.

Außerhalb des Gehäuses 11 ist eine zweite Linse des Halbleiter-Lasermoduls 10 in Form einer Plankonvexlinse 51 geeigneter Brennweite vorgesehen. Der Öffnungsfehler der Plankonvexlinse 51 ist für diese Anwendung ausreichend gering. Die Plankonvexlinse 51 dient dazu, das Licht des Halbleiter-Lasers 28 auf die End- bzw. Eintrittsfläche 53 einer folgenden optischen Faser 52 zu fokussieren. Die Plankonvexlinse 51 ist in einer als Justierring ausgebildten Halterung 47 exzentrisch angeordnet und befestigt. Der Justierring 47 besitzt hierzu eine exzentrisch angeordnete gestufte Durchgangsbohrung 48, in deren dem Isolator 46 zugewandten Bereich die Plankonvexlinse 51 mit ihrer konvexen Oberfläche dem Isolator 46 zugewandt eingesetzt und gehalten ist. Der Justierring 47 besitzt eine plane Ringfläche 49, von der ein die gestufte Bohrung 48 verlängernder Ringansatz 50 absteht, welcher mittels Laserschweißen stumpf mit dem gegenüberliegenden Ende des Isolators 46 hochstabil verbunden ist. Der die Plankonvexlinse 51 haltende Justierring 47 ist mit seiner planen Ringfläche 49 längs der ebenen Justierfläche 21 der blockförmigen Rückwand 18 in den beiden senkrecht zueinander verlaufenden Koordinatenebenen verschiebbar und dadurch gegenüber der ersten Linse 31 und dem Halbleiter-Laser 28 justierbar. Auf diese Weise kann der Winkel der Fokussierung des kollimierten Strahles auf die schräg angeschnittene Eintrittsfläche 53 der optischen Faser 52 eingestellt werden. Die Abstimmung des Strahlwinkels auf die hier unter 9 zur Senkrechten angeordnete Eintrittsfläche 53 der optischen Faser 52 erfolgt durch die vorerwähnte Exzentrizität der Plankonvexlinse 51 bzw. deren Strahlwinkel zur optischen Achse der optischen Faser 52, wobei der in der optischen Achse der Faser 42 liegende Punkt 58 ihrer Endfläche 53 im Brennpunkt der Plankonvexlinse 51 liegt.

Die optische Faser 52 ist an ihrem Endbereich von einer Faserhülse 54 umgeben, welche in einer Justierhülse 55 fixiert ist. Die der Plankovexlinse 51 zugewandte Stirnfläche 56 der Justierhülse 55 liegt weitestgehend in der Ebene des Punktes 58 der Eintrittsfläche 53, der in der optischen Achse liegt. Die Justierhülse 55 wird an einen Ringansatz 57 des Justierringes 47 mittels Laserschweißen stumpf verbunden. Die optische Faser 52, die in axialer Richtung innerhalb der Justierhülse 55 justierbar ist, wird nach einer entsprechenden Justage ebenfalls durch Laserschweißen an der Justierhülse 55 fixiert. Die Justierhülse 55 und die optische Faser 52, zumindest im Bereich ihrer Faserhülse 54, sind durch eine als Knickschutz dienende Überwurfhülse 59 geschützt, die am Justierring 47 mittels Laserschweißen gehalten ist.

Das vorstehende Ausführungsbeispiel des Halbleiter-Lasermoduls 10, das eine extrem geringe optische Rückwirkung mit sich bringt, ist im Hinblick auf die in der Zeichnung dargestellte Anschlußbelegung und Verknüpfung der Anschlüsse als analoges Halbleiter-Lasermodul dargestellt. Es versteht sich, daß mit Modifikationen in der elektrischen Signalführung dieses beschriebene Halbleiter-Lasermodul auch für alle digitalen Applikationen bis 10 Gb/s als auch für analoge CATV Anwendung finden kann.

## Patentansprüche

1. Halbleiter-Lasermodul (10), bei dem alle optischen Komponenten auf der Achse des parallelen Strahlengangs angeordnet sind, mit:
a) einem Gehäuse (11)
b) einem Halbleiter-Laser (28),
c) einer in einem ersten Träger (32, 33) gehaltenen ersten Linse (31),
d) einem optischen Isolator (46),
e) einer zweiten Linse (51), die in einem zweiten Träger (47) gehaltenen ist, der an einer Endwand (18) des Gehäuses (11) befestigt ist und sich zu dessen Außenseite hin erstreckt,
f) einer optischen Faser (52), die eine schräge Endfläche (53) hat und die in einer Hülse (54) gehaltenen ist,
**dadurch gekennzeichnet,**
g) daß das Gehäuse (11) ein Butterfly-Gehäuse ist;
h) daß der Halbleiterlaser (28), die erste Linse (31) mit dem ersten Träger (32,33) und der optische Isolator (46) innerhalb des Gehäuses (11)angeordnet sind;
i) daß die erste Linse (31) eine asphärische Linse ist, die in einem solchen Abstand vom Halbleiter-Laser (28) angeordnet ist und eine solche Brennweite hat, daß das Licht des Halbleiter-Lasers (28) zu einem annähernd parallelen Strahl geformt wird,
j) daß zwischen der ersten Linse (31) und dem optischen Isolator (46) eine als hermetische Gehäusedurchführung ausgebildete Fensteranordnung mit einem unter einem spitzen Winkel geneigten Fenster (41) angeordnet ist;
k) daß die zweite Linse eine Plankonvexlinse (51) ist, die in ihrem Träger (47) leicht exzentrisch gefaßt ist und mit ihrem Träger (47) auf der Endwand (18) des Gehäuses (11) befestigt ist;
l) daß die Hülse (54), in der die optische Faser (52) gehalten ist, in einer Justierhülse (55) gefaßt ist, die stumpf auf einem entsprechenden Ringansatz (57) des Trägers (47) der zweiten Linse (51) befestigt ist.

2. Halbleiter-Lasermodul nach Anspruch 1, **dadurch gekennzeichnet,** daß die erste Linse (31) in einer Fassung (32) gefaßt ist, die innerhalb des ringförmigen ersten Trägers (33) axial bewegbar und mit diesem, dem Halbleiter-Laser (28) abgewandt, stirnseitig vorzugsweise laserverschweißbar ist und daß der Träger (33) mit seiner dem Halbleiter-Laser (28) zugewandten ebenen Stirnfläche gegenüber einer ebenen Fläche eines Submountträgers (23) für den Halbleiter-Laser (28) verschiebbar ist.

3. Halbleiter-Lasermodul nach Anspruch 1 oder 2, **dadurch gekennzeichnet,** daß das entspiegelte Fenster (41) an einem von der Endwand (18) in das Gehäuseinnere ragenden rohrförmigen Halter (42) hermetisch dicht befestigt ist und daß der Halter (42) gleichzeitig den optischen Isolator (46) aufnimmt.

4. Halbleiter-Lasermodul nach mindestens einem der vorhergehenden Ansprüche, **dadurch gekennzeichnet,** da**ß** der optischen Isolator (46) mit schräg eingebauten Komponenten versehen und durch vorzugsweise Laserschweißen am zweiten Träger (47) der zweiten Linse (51) befestigt ist.

## Claims

1. A semiconductor laser module (10) wherein all the optical components are arranged on the axis of the parallel beam path comprising:
a) a housing (11);
b) a semiconductor laser (28);
c) a first lens (31) retained in a first carrier (32, 33);
d) an optical isolator (46);
e) a second lens (51) which is retained in a second carrier (47) which is fixed to an end wall (18) of the housing (11) and extends towards the exterior thereof;
f) an optical fibre (52) which has an inclined end face (53) and is retained in a sleeve (54);
characterised in that
g) the housing (11) is a butterfly housing;
h) the semiconductor laser (28), the first lens (31) with the first carrier (32, 33), and the optical isolator (46) are arranged inside the housing (11);
i) the first lens (31) is an aspherical lens which is arranged at such a distance from the semiconductor laser (28) and has such a focal length that the light from the semiconductor laser (28) is formed into an approximately parallel beam;
j) a window arrangement formed as a hermetic housing bushing and comprising a window (41) inclined at an acute angle is arranged between the first lens (31) and the optical isolator (46);
k) the second lens is a planoconvex lens (51) which is held slightly eccentrically in its carrier (47) and, with its carrier (47), is fixed to the end wall (18) of the housing (11);
l) the sleeve (54), in which the optical fibre (52) is retained, is held in an adjusting sleeve (55) which is butted to a corresponding annular projection (57) of the carrier (47) of the second lens (51).

2. A semiconductor laser module according to Claim 1, characterised in that the first lens (31) is retained in a holder (32) which is axially moveable inside the ringshaped, first carrier (33) and at its end face can be preferably laser-welded to said carrier (33) facing away from the semiconductor laser (28), and that with its plane end face facing towards the semiconductor laser (28) the carrier (33) is displaceable relative to a plane surface of a submount carrier (23) for the semiconductor laser (28).

3. A semiconductor laser module according to Claim 1 or 2, characterised in that the non-reflecting window (41) is fixed in hermetically sealed manner to a tubular holder (42) projecting from the end wall (18) into the housing interior and that the holder (42) simultaneously accommodates the optical isolator (46).

4. A semiconductor laser module according to at least one of the preceding claims, characterised in that the optical isolator (46) is provided with components fitted in inclined manner and is fixed, preferably by laser welding, to the second carrier (47) of the second lens (51).

## Revendications

1. Module de laser à semi-conducteurs (10), dans lequel tous les composants optiques sont disposés sur l'axe de la trajectoire du faisceau parallèle, comprenant :
a) un boîtier (11),
b) un laser à semi-conducteurs (28),
c) une première lentille (31) maintenue dans une première monture (32, 33),
d) un isolateur optique (46),
e) une deuxième lentille (51), qui est maintenue dans une deuxième monture (47), qui est fixée contre une paroi d'extrémité (18) du boîtier (11) et s'étend vers la face extérieure de ce dernier,
f) une fibre optique (52), qui est munie d'une extrémité (53) coupée en biais et qui est maintenue dans une gaine (54),
caractérisé
g) en ce que le boîtier (11) est un boîtier « Butterfly » ;
h) en ce que le laser à semi-conducteurs (28), la première lentille (31), avec la première monture (32, 33), et l'isolateur optique (46) sont disposés à l'intérieur du boîtier (11) ;
i) en ce que la première lentille (31) est une lentille non sphérique, qui est située à une distance donnée du laser à semi-conducteurs (28) et qui présente une distance focale donnée, de telle sorte que la lumière émise par le laser à semi-conducteurs (28) est dirigée en formant un faisceau pratiquement parallèle ;
j) en ce qu'un dispositif pour vitre, conçu comme un passage hermétique dans le boîtier et formant un angle aigu avec une vitre (41) inclinée, est disposé entre la première lentille (31) et l'isolateur optique (46) ;
k) en ce que la deuxième lentille est une lentille plane-convexe (51), qui est légèrement excentrée dans sa monture (47) et qui est fixée avec sa monture (47) contre la paroi d'extrémité (18) du boîtier (11) ;
l) en ce que la gaine (54), dans laquelle est maintenue la fibre optique (52), est insérée dans une gaine d'ajustement (55), qui est fixée bord à bord sur une partie annulaire en saillie (57) correspondante de la monture (47) de la deuxième lentille (51).

2. Module de laser à semi-conducteurs selon la revendication 1, caractérisé en ce que la première lentille (31) est insérée dans une monture (32), qui peut être déplacée dans le sens axial à l'intérieur du premier support cylindrique creux (33) et peut être assemblée, de préférence par soudage au laser, avec ce dernier par sa face frontale opposée au laser à semi-conducteurs (28), et en ce que le support (33), avec sa face frontale orientée vers le laser à semi-conducteurs (28), peut être déplacé par rapport à une surface plane d'une console pour support secondaire (23) pour le laser à semi-conducteurs (28).

3. Module de laser à semi-conducteurs selon la revendication 1 ou 2, caractérisé en ce que la vitre antireflet (41) est fixée hermétiquement contre un support (42) tubulaire en saillie vers l'intérieur du boîtier à travers la paroi d'extrémité (18) et en ce que le support (42) porte en même temps un isolateur (46) optique.

4. Module de laser à semi-conducteurs selon l'une quelconque des revendications précédentes, caractérisé en ce que l'isolateur optique (46) est muni de composants montés en position inclinée et est fixé, de préférence par soudage au laser, contre la deuxième monture (47) de la deuxième lentille (51).
